# EUROPÄISCHE PATENTANMELDUNG

(11) **EP 3 670 462 A1**
(43) Veröffentlichungstag der Anmeldung: **24.06.2020**
(21) Anmeldenummer: 18213398.3
(22) Anmeldetag: 18.12.2018
(51) Int. Cl.: C03C 17/00, B29C 61/02, B29C 63/42, B65D 23/08

(54) **GLASBEHÄLTER, TRÄGERANORDNUNG, VERWENDUNG EINES GLASBEHÄLTERS SOWIE VERFAHREN ZUR HERSTELLUNG UND/ODER LAGERUNG EINES REAGENZ**

(71) Anmelder: Siemens Healthcare Diagnostics Products GmbH, 35041 Marburg (DE)
(72) Erfinder: Hesse, Peter, 35043 Marburg (DE); Majewske, Torben, 35099 Burgwald (DE); Traute, Susanne, 35108 ALLENDORF (DE); Wenz, Michael, 35085 Ebsdorfergrund (DE)

(57) **Zusammenfassung**

Die Erfindung betrifft einen Glasbehälter (1, 12, 14) zur Herstellung und/oder Lagerung eines chemischen Reagenz, insbesondere eines Latex-Reagenz (11), dadurch gekennzeichnet, dass der Glasbehälter (1, 12, 14) zumindest auf einer Teilfläche (3, 4, 5, 18, 20) zumindest teilweise lichtundurchlässig ausgebildet ist, wobei der Glasbehälter (1, 12, 14) im Bereich des Violettanteils sichtbaren Lichtes eine Lichtdurchlässigkeit von maximal 30% aufweist.

Die Erfindung betrifft ferner eine Trägeranordnung.

Die Erfindung betrifft ferner eine Verwendung eines Glasbehälters.

Die Erfindung betrifft ferner ein Verfahren zur Herstellung und/oder Lagerung eines Latex-Reagenz.

## Beschreibung

Die Erfindung betrifft einen Glasbehälter zur Herstellung und/oder Lagerung eines chemischen Reagenz, insbesondere eines Latex-Reagenz.

Bei der Herstellung und Lagerung von chemischen Reagenzien sind Glasbehälter aus Klarglas und Braunglas bekannt. Klarglas ist für alle Bereiche des sichtbaren Lichts durchlässig, Braunglas absorbiert UV-Strahlung und auch im sichtbaren Bereich des Lichts bis 500 nm.

Alle Formen von Glas sind inert, d.h. sie reagieren nicht mit vielen Reagenzien und sind daher mehrfach verwendbar.

Bei der Herstellung von Latex-Reagenzien werden üblicherweise transparente Glasbehälter verwendet. Dieses Glas wird auch Klarglas oder Weißglas genannt.

Bei Verwendung der Reagenzien als Lösungsmittel in Messgeräten kann es allerdings zu Problemen kommen. Diese äußern sich in nicht verwertbaren Messungen.

Es ist daher Aufgabe der vorliegenden Erfindung, einen Glasbehälter, eine Trägeranordnung, eine Verwendung eines Glasbehälters und ein Verfahren zur Herstellung und/oder Lagerung eines Latex-Reagenzes anzugeben, bei denen die Fehlmessungen vermieden werden.

Diese Aufgabe wird gelöst durch einen Glasbehälter, wobei der Glasbehälter zumindest auf einer Teilfläche zumindest teilweise lichtundurchlässig ausgebildet ist, wobei die Lichtdurchlässigkeit im Violett-Bereich des sichtbaren Lichtes maximal 30% beträgt.

Als Kern der Erfindung wird dabei angesehen, einen Glasbehälter vorzusehen, der im Violettbereich des sichtbaren Lichts eine maximale Lichtdurchlässigkeit von 30% aufweist.

Die Lichtdurchlässigkeit ist dabei definiert als durch das Glas durchtretendes Licht im Verhältnis zum auf das Glas auftreffenden Licht, hier in einem gegebenen Spektralbereich.

Das sichtbare Licht hat dabei folgende Bereiche:

| Bereichsname | Wellenlängenbereich |
|---|---|
| Violett | 380 nm - 420 nm |
| Blau | 420 nm - 490 nm |
| Grün | 490 nm - 575 nm |
| Gelb | 575 nm - 585 nm |
| Orange | 585 nm - 650 nm |
| Rot | 650 nm - 750 nm |

Der Bereich des sichtbaren Lichts liegt also zwischen 380 nm und 750 nm.

Wird also die Hälfte oder mehr des auftreffenden Lichts im Bereich von 380 nm bis 420 nm von der Glasflasche reflektiert oder absorbiert, so weist sie im Violettbereich des sichtbaren Lichts eine maximale Lichtdurchlässigkeit von 50% auf.

Vorteilhafterweise kann der Glasbehälter im Violettbereich eine maximale Lichtdurchlässigkeit von 25% aufweisen. Bevorzugt kann die maximale Lichtdurchlässigkeit im Violettbereich 20% betragen. Weiter bevorzugt kann die maximale Lichtdurchlässigkeit im Violettbereich 15% oder 10% oder 5% betragen.

Je geringer die Lichtdurchlässigkeit ist, desto besser ist die Verwendbarkeit des Reagenzes, insbesondere auch bei längerer Lagerung.

Vorzugsweise kann der Glasbehälter im Rotbereich des sichtbaren Lichts eine maximale Lichtdurchlässigkeit von 40% aufweisen. Weiter bevorzugt kann die maximale Lichtdurchlässigkeit im Rotbereich 30%, 25%, 20% oder 15% oder 10% oder 5% betragen. Neben dem Violettbereich ist also auch der Rotbereich auszufiltern.

Vorzugsweise kann der Glasbehälter im Blau- und/oder Grün- und/oder Gelb- und/oder Orangebereich des sichtbaren Lichts eine maximale Lichtdurchlässigkeit von 40% aufweisen. Weiter bevorzugt kann die maximale Lichtdurchlässigkeit in den Bereichen jeweils 30%, 25%, 20% oder 15% oder 10% oder 5% betragen.

Bevorzugt kann der Glasbehälter im gesamten Bereich des sichtbaren Lichts eine maximale Lichtdurchlässigkeit von 30% aufweisen. Weiter bevorzugt kann die maximale Lichtdurchlässigkeit im gesamten Bereich des sichtbaren Lichts 25%, 20% oder 15% oder 10% oder 5% betragen.

Vorzugsweise kann der Glasbehälter im Bereich des UV-Lichts, und zwar zwischen 200 nm bis 380 nm, eine maximale Lichtdurchlässigkeit von 30% aufweisen. Weiter bevorzugt kann die maximale Lichtdurchlässigkeit im gesamten Bereich des sichtbaren Lichts 25%, 20% oder 15% oder 10% oder 5% betragen. Dabei kann eine Absorption von 3000 erreicht werden.

Es sei nochmals darauf hingewiesen, dass die Lichtdurchlässigkeit des gesamten Glasbehälters definiert ist.

Es hat sich überraschenderweise gezeigt, dass das vermehrte Vorkommen von LED-Lampen aufgrund ihrer sich unterscheidenden Spektralzusammensetzung im Vergleich zu Tageslicht und Glühlampen bei Reagenzien eine Verfallreaktion beschleunigen kann und daher zu Problemen bei der Lagerung von eigentlich als lichtstabil angesehenen Reagenzien führen kann.

Insbesondere kann dies Latex-RF als Reagenz betreffen. RF steht dabei für Rheumafaktor. Insbesondere kann als Reagenz N Latex RF verwendet werden.Dabei wird die Lichtundurchlässigkeit durch die maximal zulässige Lichtdurchlässigkeit definiert. Eine Lichtundurchlässigkeit liegt also bereits immer vor, wenn das Spektrum des einfallenden Lichts nicht vollständig durch das Glas durchtritt. Zur Herstellung einer Lichtundurchlässigkeit ist also keine vollständige Undurchlässigkeit erforderlich. Im Gegenteil reicht bereits die geringste Absorption zur Erzeugung einer Lichtundurchlässigkeit. Diese Lichtundurchlässigkeit ist dann zwar ebenfalls gering, aber rein qualitativ eine Lichtundurchlässigkeit.

Um von qualitativen Aussagen zu quantitativen Größen zu gelangen wird die Verwendung der Lichtdurchlässigkeit aufgrund der besseren Verständlichkeit bevorzugt.

In einer ersten Ausgestaltung kann das Glas des Glasbehälters lichtundurchlässig mit den weiter oben definierten Lichtdurchlässigkeiten ausgestaltet sein. Je nachdem ob das das Licht reflektiert oder absorbiert wird ist das Glas dann weiß oder schwarz. Klarglas wird zwar auch als Weißglas bezeichnet, es ist aber durchsichtig bzw. transparent und daher kein weißes Glas. Bei dieser Alternative ist die gesamte Fläche des Glasbehälters mit einer der definierten Lichtdurchlässigkeiten ausgebildet.

Allerdings bedingt dies eine Änderung des Produktionsprozesses, da derartige Glasbehälter nicht oder zumindest nicht in allen benötigten Größen vorhanden sind. Es muss also erst eine neue Anlage zur Herstellung der Glasbehälter erstellt werden, diese brauchen dann ein eigenes Lagersystem, etc. Diese Ausgestaltung ist also sehr aufwändig.

In einer Alternative kann eine Teilfläche durch eine auf die Glasoberfläche aufgebrachte Ummantelung lichtundurchlässig ausgebildet sein. Dadurch können die bislang verwendeten insbesondere auch transparenten Glasbehälter weiterverwendet werden. Auch die zur Aufbewahrung der Glasbehälter verwendeten Träger sind weiter zu gebrauchen. Der einzige Schritt, der einmalig vorzunehmen ist, ist das Aufbringen der Ummantelung auf das Glasgefäß.

Vorteilhafterweise kann die Ummantelung durch eine Schrumpffolie gebildet werden. Es hat sich gezeigt, dass es sich hierbei um eine technisch einfach zu realisierende Vorgehensweise handelt, um eine Ummantelung dauerhaft und sicher auf einen Glasbehälter aufzubringen.

Bevorzugt kann die Schrumpffolie als Schrumpfschlauch ausgebildet sein. Dieser kann vor dem Schrumpfen einfach an die Glasflasche angelagert werden und bedarf keiner Verarbeitungsschritte.

Bevorzugt besteht die Schrumpffolie bzw. der Schrumpfschlauch aus einem thermoplastischen Polymer oder umfasst ein thermoplastisches Polymer, insbesondere um weichmacherfreies Polyvinylchlorid (PVC-U). Bevorzugt enthält das PVC-U dabei weiter Additive umfassend Stabilisatoren und/oder Schlagzäh-Modifier wie z.B. Acrylatpolymere oder chloriertes Polyethylen. Weiter ist das Material der Schrumpffolie bzw. des Schrupfschlauches bevorzugt photostabil, insbesondere im Bereich des sichtbaren Lichtspektrums. Weiter weist das Material bevorzugt ein Zug-Elastizitätsmodul, bevorzugt nach DIN 53457, im Bereich von 1000 bis 3500 MPa auf.

Vorzugsweise kann die Schrumpffolie schwarz sein. Mit einer schwarzen Schrumpffolie kann insbesondere eine vollständige Lichtundurchlässigkeit auf einer Teilfläche oder der Gesamtfläche des Glasbehälters erzeugt werden.

Bevorzugt ist die Schrumpffolie mit einer Temperatur von +85°C bis +115°C aufgebracht. Bei dieser Temperatur kann die beste Anschmiegung der Schrumpffolie an das Glas erreicht werden.

Vorteilhafterweise weist die Schrumpffolie eine Schrumpfrate zwischen 1,5 und 2,5 auf.

Vorzugsweise kann die Ummantelung, insbesondere die Schrumpffolie, weniger als 0,1 mm dick ausgebildet ist. Diese Dicke ist diejenige nach dem Schrumpfvorgang. Es existiert eine Vielzahl an Schrumpffolien. Durch die Auswahl ist eine größtmögliche Anzahl an Trägern für die Glasbehälter weiter verwendbar.

Weiterhin kann die Ummantelung, insbesondere die Schrumpffolie, mindestens 0,06 mm dick sein. Dünnere Schrumpffolien sind schwierig in der Handhabung.

Vorteilhafterweise kann die Ummantelung eine Betriebstemperatur bis zu -20°C bis +80°C aufweisen. Diese Temperatur ist ausreichend für alle Anwendungsfälle.

Vorzugsweise kann die Teilfläche die verschlussfreie Seitenfläche umfassen. Ein Glasbehälter zur Aufnahme von Flüssigkeiten oder Feststoffen und auch Gasen besitzt einen Boden und eine Seitenfläche. Die Deckenfläche wird üblicherweise durch einen Deckel verschlossen. Auch bei Vorhandensein eines stutzenartigen Auslasses, also bei einem kannenartigen Glasbehälter, existiert ein Einlass an der Deckenfläche des Glasbehälters. Dieser ist über einen Deckel verschließbar.

Wenn der Deckel wie bei bspw. einer Teekanne aufgesetzt wird belegt er ausschließlich einen Teil der Deckenfläche. In diesem Fall kann die Ummantelung die gesamte Seitenfläche belegen.

Wird der Deckel oder allgemeiner ein Verschluss verschraubt, belegt der Verschluss auch einen oberen Abschnitt der Seitenfläche. Dann bedeckt die Ummantelung das Gewinde zur Verschraubung nicht. Vielmehr wird ein lichtundurchlässiger Verschluss ausgesucht. Dieser kann vollständig undurchlässig sein oder eine der weiter oben definierten maximalen Lichtdurchlässigkeiten aufweisen.

Vorteilhafterweise kann der Glasbehälter wie ausgeführt einen Verschluss aufweisen. Dieser bedeckt bevorzugt zumindest einen Teil der, bevorzugt die gesamte, Deckenfläche des Glasbehälters.

Vorteilhafterweise kann die Bodenfläche ummantelungsfrei ausgebildet sein. Der Glasbehälter steht in Trägern auf der Bodenfläche des Trägers, weswegen hier der Träger vorteilhafterweise lichtundurchlässig ausgestaltet ist. Dann kann die Bodenfläche ummantelungsfrei bleiben, wodurch die Herstellung des Glasbehälters vereinfacht ist.

Bevorzugt kann der Glasbehälter aus Klarglas bestehen. Dementsprechend können zur Herstellung von Reagenzien wie N Latex RF weiterhin die bislang benutzten Glasbehälter zum Einsatz kommen. Diese werden lediglich ummantelt, um einen Lichtschutz zu erreichen.

Bevorzugt kann der Glasbehälter ein Fassungsvermögen von 5 ml aufweisen. Hierbei handelt es sich um eine vorteilhafte Lagergröße.

Vorzugsweise kann der Glasbehälter als Flasche ausgestaltet sein. Er hat dann einen Flaschenhals. Vorzugsweise kann der Glasbehälter dann am oberen Ende des Flaschenhalses ein Gewinde zur Verschraubung eines Verschlusses aufweisen. Das Gewinde belegt dann einen Teil der Seitenfläche des Glasbehälters.

Wird zur Verringerung des Lichteinfalls eine Schrumpffolie oder eine sonstige Ummantelung verwendet muss das Gewinde oder jeder andere mit einem Verschluss belegte Abschnitt der Seitenwand nicht abgedeckt werden. Auch kleinere abdeckungsfreie Flächen im Bereich des Gewindes sind unproblematisch.

Bevorzugt kann der Glasbehälter silikonisiert sein. Dies vermeidet Proteinanhaftungen am Glas.

Daneben betrifft die Erfindung eine Trägeranordnung mit einem Trägergerüst und wenigstens einem Glasbehälter. Die Trägeranordnung zeichnet sich dadurch aus, dass der Glasbehälter wie beschrieben ausgebildet ist. Die zum Glasbehälter beschriebenen Ausgestaltungen können also auch bei der Trägeranordnung vorkommen.

Die Trägeranordnung ist bevorzugt als Gestell mit einer Vielzahl von Aufnahmepositionen zum Aufnehmen von bevorzugt jeweils einem Glasbehälter ausgebildet. Bevorzugt umfasst die Trägeranordnung 1 bis 24, besonders bevorzugt 1 bis 7 bzw. 6 bis 15 Aufnahmepositionen.

In einer bevorzugten Ausführungsform ist die Trägeranordnung drehbar und/oder rotierbar ausgestaltet. Bevorzugt sind die Aufnahmepositionen auf der Trägeranordnung konzentrisch angeordnet, bevorzugt auf unterschiedlichen Radien um eine Drehachse der Trägeranordnung. Alternativ können die Aufnahmepositionen aber auch bevorzugt linear nebeneinander und/oder übereinander angeordnet sein.

Wie beschrieben kann die Ummantelung des Glasbehälters am einfachsten erfolgen, wenn er in einem Träger oder einem Trägergerüst gelagert wird und dieses den Boden lichtundurchlässig abdeckt.

Vorteilhafterweise umfasst das Trägergerüst einen lichtundurchlässigen Boden. Vorteilhafterweise kann der Boden der Trägeranordnung im Rotbereich eine maximale Lichtdurchlässigkeit von 25% aufweisen. Bevorzugt kann die maximale Lichtdurchlässigkeit im Rotbereich 20% betragen. Weiter bevorzugt kann die maximale Lichtdurchlässigkeit im Rotbereich 15% oder 10% oder 5% betragen.

Vorzugsweise kann eine der beschriebenen maximalen Lichtdurchlässigkeiten im gesamten Bereich des sichtbaren Lichts und/oder im UV-Bereich vorliegen. Vorzugsweise kann der Glasbehälter also eine maximale Lichtdurchlässigkeit von 40% aufweisen. Weiter bevorzugt kann die maximale Lichtdurchlässigkeit in den Bereichen jeweils 30%, 25%, 20% oder 15% oder 10% oder 5% betragen.

Vorzugsweise kann die Trägeranordnung einen Rahmen zur seitlichen Halterung von Glasbehältern aufweisen. Damit sind die Glasbehälter auch dann abgestützt, wenn ihre Bodenfläche kein sicheres Abstellen erlaubt.

Daneben betrifft die Erfindung ein Verfahren zur Herstellung und/oder Lagerung eines Flüssigreagenz, insbesondere Latex-Reagenz, in einem Glasbehälter. Das Verfahren zeichnet sich dadurch aus, dass der Glasbehälter wie beschrieben ausgebildet ist. Alle sonstigen Verfahrensschritte können identisch bleiben.

Vorzugsweise kann vorgesehen sein, dass die Herstellung in einem beliebig ausgestalteten Behälter, insbesondere Glasbehälter, und zumindest ein Teil der Lagerung in einem beschriebenen Glasbehälter erfolgt. Die Herstellung und eine kurzzeitige Lagerung bspw. im Zeitraum von einigen Minuten ohne den beschriebenen Glasbehälter ist weitgehend auswirkungsfrei.

Bevorzugt kann als Latex-Reagenz N Latex RF hergestellt oder gelagert werden. Vorteilhafterweise kann das Latex-Reagenz eine Latex-Suspension sein.

Das Latex-Reagenz (Reaktionspartner) umfasst bevorzugt mindestens zwei Komponenten oder besteht bevorzugt aus zwei Komponenten. Die erste Komponente umfasst bevorzugt ein Kernpolymerisat und weist bevorzugt einen Durchmesser von etwa 200 nm auf. An das Kernpolymerisat ist bevorzugt ein Immunkomplex aus human Gammaglobulin mit anti-h-Gammaglobulin, bevorzugt adsorptiv gekoppelt. Die zweite Komponente umfasst bevorzugt ein Kernpolymerisat, das bevorzugt einen Durchmesser von etwa 150 nm aufweist, an das bevorzugt ein Immunkomplex aus Gammaglobulin mit anti-h-IgG-Antiserum, bevorzugt adsorptiv gekoppelt ist. Bevorzugt erfolgt die Kopplung mit einem Puffer bei einem pH-Wert von bevorzugt 8,2.

Bevorzugt enthält das Latex-Reagenz Polystyrol-Latex oder besteht aus Polystyrol-Latex. Bevorzugt umfasst das Latex-Reagenz Partikel aus Latex und/oder Polystyrol-Latex, die bevorzugt mit einem Immunkomplex beladen sind. Bevorzugt liegt das Latex-Reagenz als Latexsuspension vor.

Bevorzugt werden die Partikel des Latex-Reagenz mittels Ultraschalleinwirkung, bevorzugt unter Verwendung eines Ultraschallgeräts, auf eine vorteilhafte Größe oder Größenverteilung gebracht. Bevorzugt weisen die Partikel eine Bitgröße von 1400 Bits auf.

Bevorzugt liegt das Latex-Reagenz als Endprodukt als stabile Komponente vor. Dabei können jedoch insbesondere durch Licht und Sauerstoff chemische Bindungen schwächen. Besonders kurzwelliges Licht, z.B. UV-Licht, bis 500 nm induziert den Abbau von Polysterol, wobei der stärkste Abbau durch Licht bei Wellenlängen von 250 bis 500 nm auftritt. Dabei kommt es auf molekularer Ebene z.B. durch hydroperoxid-Photolyse zum Kettenabbau unter Bildung einer weiteren aromatischen Ketogruppe. Der Abbau führt insbesondere zur Versprödung und Zersetzung der Partikel des Latex-Reagenz.

Daneben betrifft die Erfindung die Verwendung eines Glasbehälters, der im Bereich des sichtbaren Lichts zumindest teilweise lichtundurchlässig ist, zur Herstellung eines Flüssigreagenz, insbesondere Latex-Reagenz.

Bevorzugt betrifft die Verwendung einen Glasbehälter wie beschrieben.

Daneben betrifft die Erfindung ein Verfahren zur Herstellung eines Glasbehälters. Dieses umfasst die Schritte:
- Bereitstellen einer Glasflasche,
- Bereitstellen einer Schrumpfschlauchfolie mit vorgegebener Länge,
- Aufstülpen der Schrumpfschlauchfolie über die Glasflasche, und
- Erhitzen der Schrumpfschlauchfolie, sodass diese an der Glasflasche fest anliegt.

Auf diese Art und Weise können die Glasbehälter auf einfache Art und Weise aus Glasflaschen hergestellt werden.

Vorzugsweise kann die Glasflasche aus Klarglas bestehen.

Vorteilhafterweise kann die Schrumpfschlauchfolie so abgelängt sein, dass sie mit einem Ende bis zum Boden reicht und mit dem anderen Ende am Flaschenhals maximal zwei Gewindeschliffe freilässt. Dann bedeckt die Schrumpfschlauchfolie die Glasflasche in einem ausreichenden Maß.

Vorteilhafterweise kann der Innendurchmesser der ungeschrumpften Schrumpfschlauchfolie größer sein als der Außendurchmesser der Glasflasche. Es besteht also Spiel beim Überziehen der Folie. Dadurch kann die Schrumpfschlauchfolie einfach über die Glasflasche gestülpt und einfach auf dem Boden abgestellt werden. Danach kann die Schrumpfschlauchfolie erhitzt werden.

Bei Glasflaschen mit 5 ml Inhalt ist bspw. eine Länge von 34 mm optimal.

Vorteilhafterweise wird die Schrumpfschlauchfolie mit Heißluft mit einer Temperatur zwischen 85°C und 95°C erhitzt.

Alle in Bezug auf den Glasbehälter beschriebenen Ausgestaltungen können auch bei der Herstellung berücksichtigt werden. Insbesondere kann die Schrumpfschlauchfolie schwarz sein und die beschriebene maximale Lichtdurchlässigkeit, insbesondere maximal 5%, erzeugen.

Alle zum Glasbehälter beschriebenen Ausgestaltungen können sich also in einer der beschriebenen Weiterbildungen bei der Trägeranordnung, der Verwendung und den Herstellungsverfahren finden.

Weitere Vorteile, Merkmale und Besonderheiten der vorliegenden Erfindung ergeben sich aus der nachfolgenden Beschreibung vorteilhafter Ausgestaltungen der Erfindung.

Dabei zeigen:
- Fig. 1: einen Glasbehälter in einer ersten Ausgestaltung,
- Fig. 2: einen Glasbehälter in einer zweiten Ausgestaltung,
- Fig. 3: einen Glasbehälter in einer dritten Ausgestaltung,
- Fig. 4: eine Trägeranordnung in einer ersten Ansicht,
- Fig. 5: eine Trägeranordnung in einer zweiten Ansicht, und
- Fig. 6: ein Ablaufschema zur Herstellung eines Latex-Reagenz.

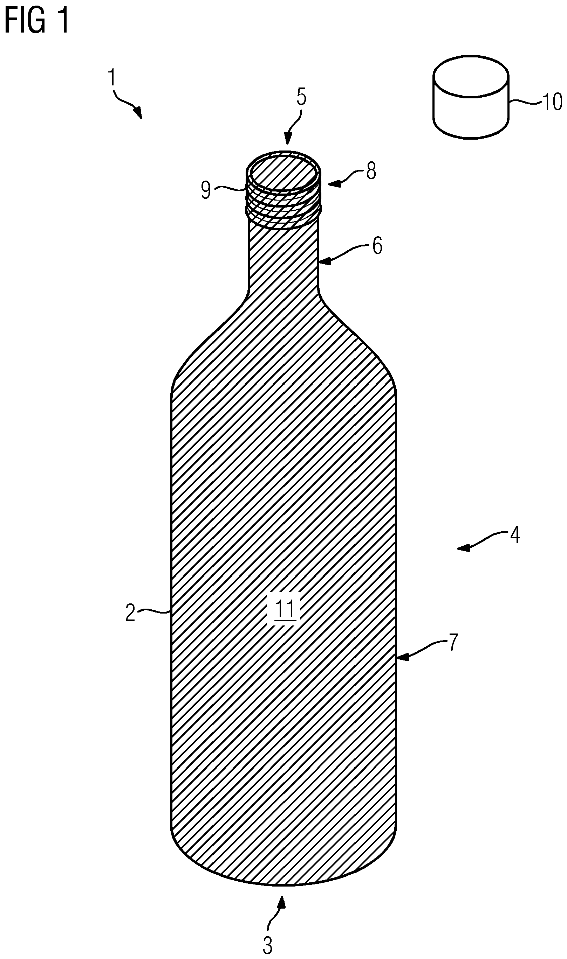

Figur 1 zeigt einen Glasbehälter 1 in einer ersten Ausgestaltung. Der Glasbehälter 1 weist als Behälterkörper eine Glasflasche 2 auf. Die Glasflasche besitzt eine Bodenfläche 3, eine Seitenfläche 4 und eine Deckenfläche 5 auf.

Das Glas selbst ist absorbierend ausgestaltet, sodass es schwarz aussieht.

Die Flasche weist einen Flaschenhals 6 auf. Dieser ist schmaler als der Flaschenbauch 7. Am oberen Ende 8 des Flaschenhalses 6 ist ein Gewinde 9, über das ein Verschluss 10 mit der Glasflasche 2 verschraubt wird. Der Verschluss 10 bedeckt die Glasflasche 2 vorteilhafterweise vollständig lichtundurchlässig. Dann besitzt er eine Lichtdurchlässigkeit von 0%.

Das Glas des Glasbehälters 1 bwz. der Glasflasche 2 besitzt eine Lichtdurchlässigkeit von weniger als 5% im gesamten Bereich des sichtbaren Lichts. Besonders relevant ist die geringe Lichtdurchlässigkeit im Rotbereich des sichtbaren Lichts.

Bei dieser Ausgestaltung sind als Teilflächen die gesamte Seitenfläche 3 und die gesamte Bodenfläche 2 lichtundurchlässig mit einer Lichtdurchlässigkeit von kleiner als 5% im gesamten Bereich des sichtbaren Lichts ausgebildet. Die Deckenfläche 5 ist durch den Verschluss 10 vollständig lichtundurchlässig. Somit ist auch die Lichtdurchlässigkeit des gesamten Glasbehälters 1 kleiner als 5%.

In der Glasflasche befindet sich ein Reagenz 11. Bevorzugt handelt es sich dabei um N Latex RF.

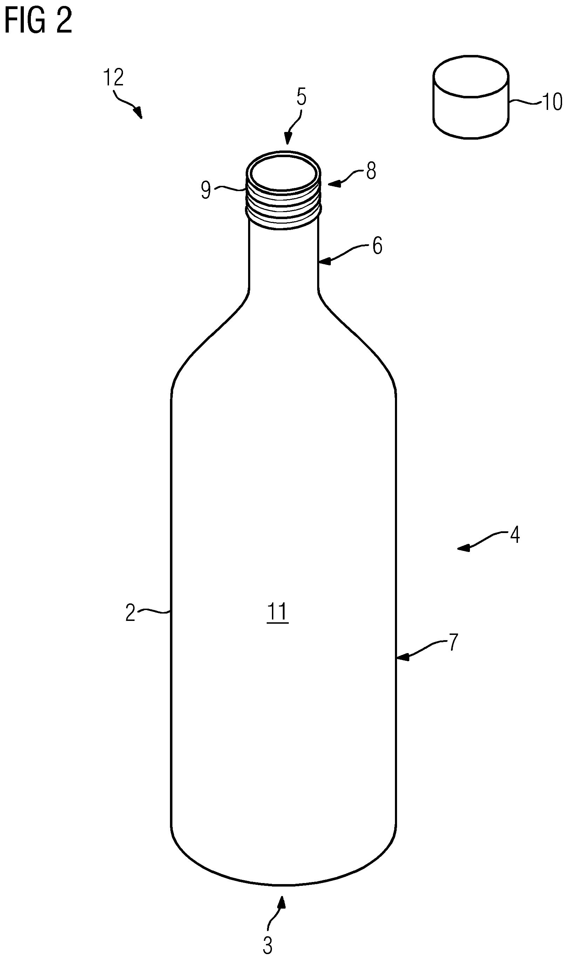

Figur 2 zeigt einen Glasbehälter 12. Dieser unterscheidet sich von dem Glasbehälter 1 lediglich darin, dass das Glas der Glasflasche 13 des Glasbehälters 12 weiß ist und dadurch eine Lichtdurchlässigkeit von kleiner als 5% des Glasbehälters 12 erreicht. Zur Vermeidung unnötiger Wiederholungen wird ansonsten auf Figur 1 verwiesen.

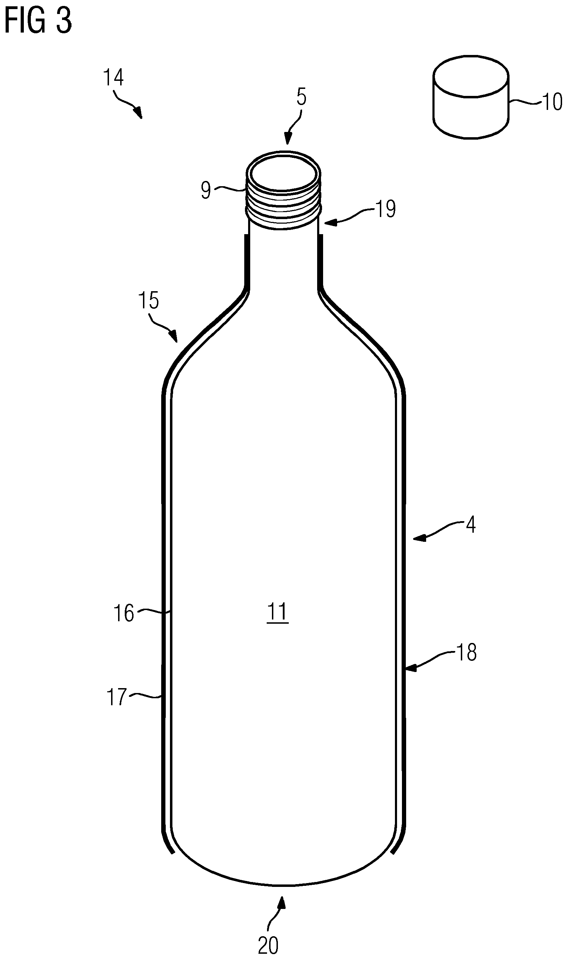

Figur 3 zeigt einen Glasbehälter 14. Eine verringerte Lichtdurchlässigkeit wird bei dem Glasbehälter 14 durch eine Ummantelung 15 der Glasflasche 16 in Form einer Schrumpffolie 17 erreicht. Die Glasflasche 16 kann aus Klarglas bestehen.

Die Schrumpffolie 17 ist schwarz und nach dem Aufbringen weniger als 0,1 mm dick. Dadurch wird der Durchmesser des Glasbehälters 14 nicht wesentlich vergrößert.

Die Schrumpffolie 17 bedeckt als Teilfläche die verschlussfreie Seitenfläche 18. Ein möglicherweise vorhandener geringfügiger Spalt 19 zwischen Schrumpffolie 17 und Verschluss 10 ist dabei unerheblich.

Die Bodenfläche 20 der Glasflasche 16 bleibt unbedeckt. In der Lagerposition ist die Bodenfläche 20 durch den Untergrund, auf dem der Glasbehälter 14 steht, bedeckt.

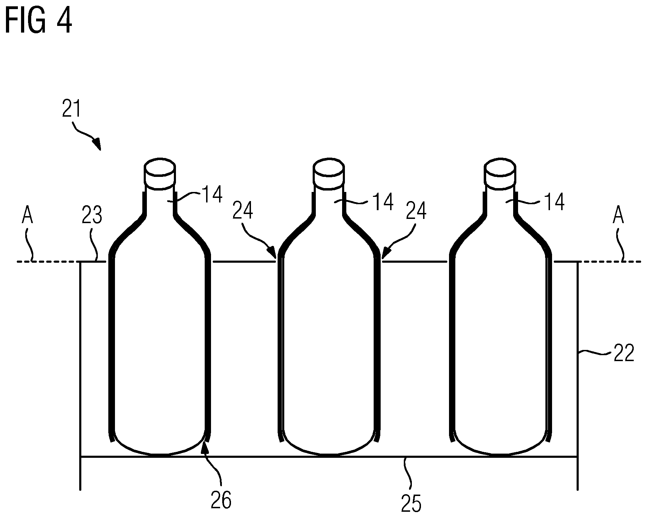

Figur 4 zeigt eine Trägeranordnung 21. Diese umfasst ein Trägergerüst 22 und mehrere Glasbehälter 14. Diese sind bevorzugt wie zu Figur 3 beschrieben ausgebildet. Es können aber auch die Glasbehälter 1 oder 12 verwendet werden.

Das Trägergerüst 22 besitzt einen Rahmen 23 mit Ausnehmungen 24 und einen Trägerboden 25. Die Glasbehälter 14 werden in die Ausnehmungen 24 des Rahmens 23 eingeführt und auf dem Trägerboden 25 abgestellt. Der Trägerboden 25 ist vorzugsweise vollständig lichtundurchlässig.

Durch das Positionieren der Glasflaschen 16 der Glasbehälter 14 im Trägergerüst 22 ist der Boden 20 zumindest weitgehend abgedeckt. Auch hier ist ein geringfügiger Spalt 26 zwischen Schrumpffolie und Trägerboden 25 unproblematisch.

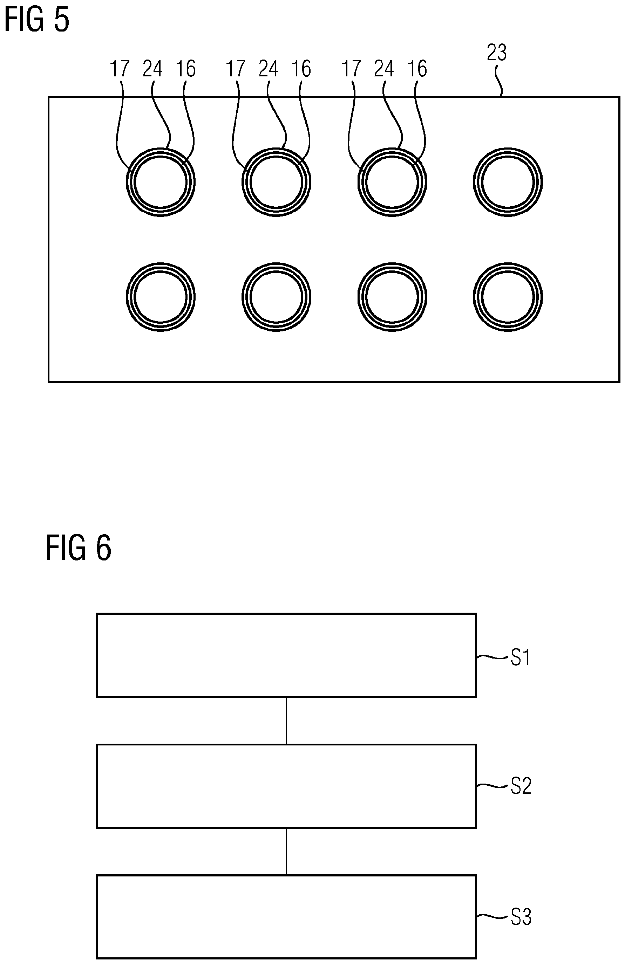

Figur 5 zeit die Trägeranordnung auf Höhe der Linie A-A. Dabei kann man erkennen, dass eine Schrumpffolie 17 von weniger als 0,1 mm Dicke eine Weiterverwendung von bereits verwendeten Glasflaschen 16 in einer ebenfalls bereits verwendeten Trägeranordnung 21 erlaubt und ebenfalls eine ausreichende Lichtundurchlässigkeit erreicht wird. Die Durchmesser der Ausnehmungen 24 erlauben also eine Verwendung von Schrumpffolien 17.

Dabei sind der Übersichtlichkeit halber nur drei der exemplarischen acht Glasbehälter 14 mit Bezugszeichen versehen.

Figur 6 zeigt ein Ablaufschema zur Durchführung eines Verfahrens zur Herstellung eines Reagenz. Exemplarisch wird es an der Herstellung eines Latex-Reagenz und insbesondere N Latex RF-Reagenz gezeigt.

In Schritt S1 wird die Herstellung in einem großvolumigen Behälter von 1 Liter vorgenommen. Dabei werden alle Teilschritte, die zur Erzeugung von N Latex RF bekannt und notwendig sind, durchgeführt.

In Schritt S2 wird das Latex-Reagenz in Glasbehälter 14 mit einem Volumen von 5 ml portioniert. Die Glasbehälter sind vorteilhafterweise wie zu Figur 3 beschrieben ausgebildet.

Die Glasbehälter können nach dem Umfüllen in die Glasbehälter 14 langfristig in einer dunklen Umgebung gelagert werden. Hierfür ist bereits ein Pappkarton ausreichend.

Nach einer beliebigen Lagerzeit in dunkler Umgebung werden die Glasbehälter 14 in Schritt S3 in einem Trägergerüst 22 positioniert. Im Trägergerüst 22 werden die Glasbehälter während einer Testung an einem Analyzer gelagert, wobei das Reagenz 11 in einem Glasbehälter 14 als Reaktionspartner dienen kann. Die Trägeranordnung 21 ist bevorzugt wie zu Figuren 4 und 5 beschrieben ausgebildet.

Das Reagenz ist in der Trägeranordnung 21 beinahe vollständig lichtundurchlässig gelagert. Maximal eine Lichtdurchlässigkeit von 5% im Rotbereich, vorzugsweise im gesamten Bereich des sichtbaren Lichts und des UV-Lichts, ist vorhanden. Dann verdirbt das Reagenz 11 auch nicht während der Testung.

Durch die Verwendung einer Schrumpffolie 17 kann das restliche Verfahren zur Herstellung und Lagerung von N Latex RF insbesondere unter Verwendung bereits benutzter Glasflaschen 16 und Trägergerüsten 22 durchgeführt werden.

### Bezugszeichen:

- 1: Glasbehälter
- 2: Glasflasche
- 3: Bodenfläche
- 4: Seitenfläche
- 5: Deckenfläche
- 6: Flaschenhals
- 7: Flaschenbauch
- 8: oberes Ende
- 9: Gewinde
- 10: Verschluss
- 11: Reagenz
- 12: Glasbehälter
- 13: Glasflasche
- 14: Glasbehälter
- 15: Ummantelung
- 16: Glasflasche
- 17: Schrumpffolie
- 18: Seitenfläche
- 19: Spalt
- 20: Bodenfläche
- 21: Trägeranordnung
- 22: Trägergerüst
- 23: Rahmen
- 24: Ausnehmungen
- 25: Trägerboden
- 26: Spalt

## Patentansprüche

1. Glasbehälter (1, 12, 14) zur Herstellung und/oder Lagerung eines chemischen Reagenz (11), insbesondere eines Latex-Reagenz (11), **dadurch gekennzeichnet, dass** der Glasbehälter (1, 12, 14) zumindest auf einer Teilfläche (3, 4, 5, 18, 20) zumindest teilweise lichtundurchlässig ausgebildet ist, wobei der Glasbehälter (1, 12, 14) im Bereich des Violettanteils sichtbaren Lichtes eine Lichtdurchlässigkeit von maximal 30% aufweist.

2. Glasbehälter nach Anspruch 1, **dadurch gekennzeichnet, dass** die Teilfläche (3, 4, 5, 18, 20) durch eine auf die Glasoberfläche aufgebrachte Ummantelung (15) lichtundurchlässig ausgebildet ist.

3. Glasbehälter nach Anspruch 2, **dadurch gekennzeichnet, dass** die Ummantelung (15) durch eine Schrumpffolie (17) gebildet wird.

4. Glasbehälter nach Anspruch 2 oder 3, **dadurch gekennzeichnet, dass** die Ummantelung (15) weniger als 0,1 mm dick ausgebildet ist.

5. Glasbehälter nach einem der vorangehenden Ansprüche, **dadurch gekennzeichnet, dass** die Teilfläche die verschlussfreie Seitenfläche (18) umfasst.

6. Glasbehälter nach einem der vorangehenden Ansprüche, **dadurch gekennzeichnet, dass** die Teilfläche die Bodenfläche (4) umfasst.

7. Glasbehälter nach einem der vorangehenden Ansprüche, **dadurch gekennzeichnet, dass** die Lichtdurchlässigkeit der Teilfläche im gesamten Bereich sichtbaren Lichtes maximal 5% beträgt.

8. Glasbehälter nach einem der vorangehenden Ansprüche, **dadurch gekennzeichnet, dass** das Glasgefäß (16) des Glasbehälters (14) aus Klarglas besteht.

9. Glasbehälter nach einem der vorangehenden Ansprüche, **dadurch gekennzeichnet, dass** der Glasbehälter (14) ein Glasgefäß in Form einer Glasflasche (16) umfasst.

10. Trägeranordnung (21) mit einem Trägergerüst (22) und wenigstens einem Glasbehälter (14), **dadurch gekennzeichnet, dass** der Glasbehälter (14) nach einem der vorangehenden Ansprüche ausgebildet ist.

11. Verfahren zur Herstellung und/oder Lagerung eines Latex-Reagenz (11) in einem Glasbehälter (1, 12, 14), **dadurch gekennzeichnet, dass** der Glasbehälter (1, 12, 14) nach einem der Ansprüche 1 bis 9 ausgebildet ist.

12. Verfahren zur Herstellung eines Glasbehälters mit den Schritten:
- Bereitstellen einer Glasflasche (13),
- Bereitstellen einer Schrumpfschlauchfolie (17) mit vorgegebener Länge,
- Aufstülpen der Schrumpfschlauchfolie (17) über die Glasflasche (13), und
- Erhitzen der Schrumpfschlauchfolie, sodass diese an der Glasflasche fest anliegt.

13. Verwendung eines Glasbehälters (1, 12, 14), der im Bereich des sichtbaren Lichts zumindest teilweise lichtundurchlässig ist, zur Herstellung eines Latex-Reagenz.

14. Verwendung nach Anspruch 13, **dadurch gekennzeichnet, dass** der Glasbehälter (1, 12, 14) nach einem der Ansprüche 1 bis 9 ausgebildet ist.
